# EUROPÄISCHE PATENTANMELDUNG

(11) **EP 2 738 564 A1**
(43) Veröffentlichungstag der Anmeldung: **04.06.2014**
(21) Anmeldenummer: 13005481.0
(22) Anmeldetag: 23.11.2013
(51) Int. Cl.: G01S 3/46, G01S 5/14

(54) **Ortungseinrichtung zum Orten einen kurzzeitigen Hochleistungs-Mikrowellenpuls abgebenden Quelle**

(30) Priorität: 03.12.2012 DE 102012023627
(71) Anmelder: Diehl BGT Defence GmbH & Co. KG, 88662 Überlingen (DE)
(72) Erfinder: Umerski, Adam, DE - 90480 Nürnberg (DE)
(74) Vertreter: Diehl Patentabteilung

(57) **Zusammenfassung**

Ortungseinrichtung zum Orten einer einen kurzzeitigen Hochleistungs-Mikrowellenpuls abgebenden Quelle (3), wobei die Ortungseinrichtung (24) mindestens drei beabstandete, nicht auf einer Linie angeordnete Empfangsantennen (1, 2, 8, 9, 10, 11, 17), denen jeweils eine Detektionseinrichtung (18) zur Erfassung des Zeitpunkts des antennenseitigen Empfangs des Hochleistungs-Mikrowellenpulses zugeordnet ist, mindestens eine Kurzzeitmesseinrichtung (19) zum Ermitteln mindestens zweier Zeitunterschiede zwischen den Empfangszeitpunkten jeweils zweier der Detektionseinrichtungen (18), sowie eine Recheneinrichtung (22) zur Berechung eines Ursprungsortes des Hochleistungs-Mikrowellenpulses basierend auf zumindest zwei der gemessenen Zeitunterschiede umfasst.

## Beschreibung

Die Erfindung betrifft eine Ortungseinrichtung zum Orten einer kurzzeitigen Hochleistungs-Mikrowellenpuls abgebenden Quelle.

Angriffe durch Mikrowellenpulse können die Funktionsfähigkeit elektronischer Schaltungen gefährden. Daher ist es wichtig, Quellen solcher Angriffe rasch zu detektieren und aufzuspüren. Nur in diesem Fall können rechtzeitig Schutz- und Abwehrmaßnahmen eingeleitet werden. Eine aktive Detektion der Quelle wie beispielsweise durch Radar ist schwierig, da häufig keine Informationen über die Beschaffenheit der Quelle vorliegen. Daher ist es vorteilhaft, eine solche Quelle passiv zu detektieren.

Zur Detektion von elektromagnetischen Strahlenquellen werden häufig Testgeräte mit langen Integrationszeiten genutzt, die quasi-kontinuierlich abgestrahlte Mikrowellenenergie auch bei geringem Pegel detektieren. Solche Testgeräte werden beispielsweise als Elektrosmog-Warner zum Prüfen der Dichtigkeit von MikrowellenGeräten oder zum Messen der Emission von Mobilfunkantennen genutzt. Solche Geräte sind zur Detektion von kurzzeitigen Hochleistungs-Mikrowellenpulsen aber nicht geeignet, da schwächere, kontinuierlich strahlende Strahlenquellen hier ein größeres Messsignal erzeugen als ein Hochleistungs-Mikrowellenpuls, der nur eine sehr kurze Dauer hat.

Aus DE 10 2006 037 209 B4 ist eine Detektionseinrichtung zum Detektieren eines gegen das Objekt gerichteten Angriffs mit einem kurzzeitigen Hochleistungs-Mikrowellenpuls bekannt. Hier wird als Antenne ein unabgestimmter Dipol genutzt, der eine HF-Diode speist, wobei die Ansprechschwelle der HF-Diode, bezogen auf sein Kurzzeitintegral über einige Nanosekunden, hoch genug ist, so dass sie bei der Empfangsfeldstärke der permanenten Umfeldstrahlung nicht durchschaltet. Ein Durchschalten der HF-Diode wird also als Detektion eines Hochleistungs-Mikrowellenpulses interpretiert. Die Druckschrift beschreibt ebenfalls, wie durch ein Array von drei Antennen die Richtung bestimmt werden kann, in der die Quelle des Hochleistungs-Mikrowellenpulses liegt. Auch eine Abschätzung der Entfernung über den Vergleich der Empfangsamplituden einzelner Detektionseinrichtungen ist beschrieben. Ein Amplituden diskriminierendes Verfahren zur Abstandsbestimmung ist jedoch anfällig für Streuungs-, Abschattungs- und Resonanzeffekte.

Der vorliegenden Erfindung liegt damit die Aufgabe zugrunde, eine demgegenüber verbesserte Ortungseinrichtung zum Orten einer einen kurzzeitigen Hochleistungs-Mikrowellenpuls abgebenden Quelle anzugeben.

Die Aufgabe wird durch eine Ortungseinrichtung der eingangs genannten Art gelöst, wobei die Ortungseinrichtung mindestens drei beabstandete, nicht auf einer Linie angeordnete Empfangsantennen, denen jeweils eine Detektionseinrichtung zur Erfassung des Zeitpunkts des antennenseitigen Empfangs des Hochleistungs-Mikrowellenpulses zugeordnet ist, mindestens eine Kurzzeitmesseinrichtung zum Ermitteln mindestens zweier Zeitunterschiede zwischen den Empfangszeitpunkten jeweils zweier Detektionseinrichtungen, sowie eine Recheneinrichtung zur Berechnung eines Ursprungsorts des Hochleistungs-Mikrowellenpulses basierend auf zumindest zwei der gemessenen Zeitunterschiede umfasst.

Der Erfindung liegt die Idee zugrunde, eine Methode zur Ortsbestimmung für die Quelle des Hochleistungs-Mikrowellenpulses zu nutzen, die ausschließlich auf Laufzeitunterschieden des Mikrowellensignals basiert. Die Laufzeit des Mikrowellenpulses ist weniger empfindlich gegen Streuungs-, Abschattungs- und Resonanzeffekte. Abschattungs- und Resonanzeffekte wirken sich hauptsächlich auf die Signalamplitude aus, im Fall von Streueffekten kann es zwar zu einem mehrfachen Auftreten des Pulses beim Empfang kommen, hier ist es aber ausreichend, ausschließlich die erste Detektion zu berücksichtigen.

Die Bestimmung eines Ortes durch Laufzeitunterschiede soll zunächst unter Benutzung von zwei Antennen erläutert werden. Werden zwei Antennen genutzt, so entspricht ein Zeitunterschied beim Empfang eines Signals, aufgrund der konstanten Ausbreitungsgeschwindigkeit elektromagnetischer Wellen, einem unterschiedlichen Abstand der Quelle von den beiden Antennen. Es ist also kein absoluter Abstand bekannt, jedoch ein Unterschied des Abstands zwischen der Quelle und der ersten Antenne und der Quelle und der zweiten Antenne. Die Kurve der Punkte, deren absolute Differenz der Abstände zu zwei gegebenen Punkten konstant ist, ist die Hyperbel. Hier entsprechen die beiden Antennen den Brennpunkten. Da hier das Vorzeichen des Abstands bekannt ist, das heißt es ist bekannt, welche der beiden Antennen das Signal zuerst empfängt, wird der Ort der Quelle auf einen Ast der Hyperbel eingeschränkt. Ist der Abstand zwischen Quelle und einer der Antennen sehr viel größer als der Abstand zwischen den Antennen, eine Bedingung, die bei der Detektion eines Angriffs mit Hochleistungs-Mikrowellenpulsen in der Regel erfüllt ist, so kann statt einer Hyperbel näherungsweise die Asymptote der Hyperbel verwendet werden. Es ist also möglich, mit zwei Antennen zwei Richtungen zu bestimmen, wobei die Quelle des Hochleistungs-Mikrowellenpulses in einer dieser Richtungen liegt.

Stehen nun drei Antennen zur Verfügung, so können aus dem Laufzeitunterschied zwischen der ersten und der zweiten bzw. der ersten und der dritten Antenne jeweils ein Hyperbelzweig bzw. zwei Richtungen berechnet werden. Diese Hyperbelzweige bzw. Halbgeraden entspringen unterschiedlichen Punkten. Es ist daher möglich, Schnittpunkte zwischen den Hyperbelzweigen bzw. Halbgeraden zu bestimmen. Einer dieser Schnittpunkte beschreibt die Position der Quelle des Hochleistungs-Mikrowellenpulses. Der richtige Schnittpunkt kann dann durch Berücksichtigung der Detektionsreihenfolge der Antennen bestimmt werden.

Bereits bei der Nutzung der minimalen drei erforderlichen Antennen, kann in diesem Verfahren eine Konsistenzprüfung durchgeführt werden. Entspricht der gemessene Zeitabstand zwischen den Empfangszeitpunkten zweier Antennen einem Abstand, der größer ist als der Abstand zwischen den Antennen, so ist davon auszugehen, dass ein Messfehler vorliegt. Bereits mit drei Antennen ist die Quelle des Hochleistungs-Mikrowellenpulses vollständig bestimmt. Dennoch ist eine höhere Robustheit des Verfahrens erstrebenswert. Im einfachsten Fall kann eine größere Robustheit des Verfahrens erreicht werden, indem mehr Antennen genutzt werden. Auch ein größerer Abstand zwischen den Antennen reduziert die Messfehler. Ein größerer Abstand zwischen den Antennen erschwert aber zugleich die Kurzzeitmessung. Mikrowellensignale breiten sich mit Lichtgeschwindigkeit aus. Damit ist bei einem Abstand der Antennen im Meterbereich das zu messende Zeitintervall im Nanosekundenbereich. Für solche, sehr kurze Zeitintervalle ist es vorteilhaft, Kabellängen kurz zu halten sowie zusätzliche Wandlungen des Signals oder gar eine kabellose Übertragung zu vermeiden.

Um dennoch die Vorteile großer Antennenabstände bzw. vieler Antennen zu nutzen ist es vorteilhaft, die Antennen als Cluster anzuordnen. In diesem Fall erfolgt die Messung eines Laufzeitunterschieds nur zwischen wenigen, nahe benachbarten Antennen und zwischen den Clustern werden ausschließlich Parameter ausgetauscht, die Richtungen oder Bereiche, in denen sich die Quelle befindet, beschreiben. Damit ist der Informationsaustausch zwischen Clustern nicht zeitkritisch.

Die hohe notwendige Empfindlichkeit der Zeitmessung erfordert auch eine gute Abstimmung des Messaufbaus, sowohl bezüglich von Laufzeiten als auch bezüglich der Empfindlichkeit der einzelnen Detektionseinrichtungen. Neben einer Vorauswahl solcher abgestimmten Komponenten ist hier auch eine Kalibrierung des Gerätes erforderlich. Diese ist auf zahlreiche Weisen möglich. Werden beispielsweise Gruppen von Antennen fest in einem Gehäuse montiert und erfolgt die Messung von Zeitunterschieden ausschließlich für Antennen, die sich innerhalb des gleichen Gehäuses befinden, so ist eine Vorkalibrierung bei Herstellung des Antennenclusters möglich. So können nach der Herstellung dieses Clusters Testquellen in unterschiedlichen Richtungen und Abständen genutzt werden, um die Kalibrierung durchzuführen.

Insbesondere, wenn eine Zeitmessung zwischen einzelnen aufgebauten Antennen beispielsweise an einem Gebäude durchgeführt werden soll, ist es vorteilhaft, wenn nach Aufbau der Ortungseinrichtung eine Kalibrierung durch Testquellen erfolgt. Alternativ können an der Ortungseinrichtung, insbesondere als Teil eines Antennenclusters, auch fest angebrachte Testquellen vorgesehen sein. Damit ist eine Selbstkalibrierung ohne zusätzliche Ausrüstung möglich. Dies ist insbesondere dann vorteilhaft, wenn die Ortungseinrichtung mobil genutzt werden soll.

Eine Möglichkeit des Aufbaus der Ortungseinrichtung ist es, dass die Empfangsantennen unabgestimmte Dipole sind und die Detektionseinrichtungen eine HF-Diode aufweisen, deren Ansprechschwelle mindestens so hoch ist, dass die HF-Diode, bezogen auf ein Kurzzeitintegral über einige Nanosekunden, erst oberhalb der Empfangsfeldstärke einer permanenten Umweltstrahlung durchschaltet. Da durch die Ortungseinrichtung relativ starke Signale gemessen werden sollen, ist eine Nutzung einer Antenne mit hohem Antennengewinn nicht erforderlich. So können nicht abgestimmte, sehr kleine Dipolantennen mit Rundumcharakteristik genutzt werden. Zudem ist es vorteilhaft, wenn die Feldstärken sowohl horizontal als auch vertikal, also in beiden zueinander orthogonalen Polarisierungen erfasst werden. So ist eine Messung beispielsweise über D-Dot-Sonden als differentielle Messung der zeitlichen Ableitung des momentanen elektrischen Felds möglich. Solche Sonden sind kommerziell verfügbar und im Einsatz. Eine Detektion über eine HF-Diode ist vorteilhaft, da hier das Durchlassen der Diode direkt als Empfangssignal ausgewertet werden kann. Da bei Hochleistungs-Mikrowellenpulsen eine steile Anstiegsflanke erwartet wird, sind geringfügige Unterschiede des Ansprechpunkts der HF-Dioden der verschiedenen Detektionseinrichtungen weniger störend. Dennoch kann eine Abstimmung der HF-Diode beispielsweise durch zusätzliche elektronische Bauteile oder Selektion der Dioden vorteilhaft sein.

Es ist besonders vorteilhaft, wenn wenigstens zwei beabstandet angeordnete Empfangsantennencluster vorhanden sind, wobei jeder Empfangsantennencluster mindestens zwei, vorzugsweise drei, Empfangsantennen aufweist. Durch die Nutzung mehrer Empfangsantennencluster kann die Robustheit des Verfahrens wesentlich verbessert werden. Bei Vorhandensein von mindestens zwei Empfangsantennen kann mit jedem der Empfangsantennencluster, vorzugsweise durch eine direkt am Cluster angeordnete Kurzzeitmesseinrichtung, ein Bereich bestimmt werden, in dem sich die Hochleistungs-Mikrowellenpuls abgebende Quelle befindet. So kann direkt für den Cluster eine Hyperbel bzw. zwei Richtungen bestimmt werden, auf der bzw. in denen die den Hochleistungs-Mikrowellenpuls abgebende Quelle liegt. Ist an dem Empfangsantennencluster keine eigene Recheneinrichtung vorgesehen, ist es jedoch auch ausreichend, ausschließlich einen Zeitunterschied zu bestimmen und diesen an eine Recheneinrichtung zu übermitteln. Ein Empfangsantennencluster kann also als zumindest teilabgeschlossenes System wirken, das keiner zeitkritischen Kommunikation nach außen bedarf.

Es ist besonders vorteilhaft, wenn ein Empfangsantennencluster mindestens drei Empfangsantennen aufweist. In diesem Fall kann alleine mit einem Empfangsantennencluster bereits die Position der Quelle des Hochleistungs-Mikrowellenpulses bestimmt werden. Da die Antennen eines Empfangsantennenclusters allerdings in der Regel nahe beieinander liegend angeordnet sind, ist diese Messung in der Regel stark fehlerbehaftet. Stehen also mindestens zwei dieser Empfangsantennencluster zur Verfügung, so kann beispielsweise mit jedem Empfangsantennencluster eine Richtung bestimmt werden und der Schnittpunkt dieser Richtungen als Ort der den Hochleistungs-Mikrowellenpuls abgebenden Quelle bestimmt werden. Somit kann eine wesentlich verbesserte Genauigkeit erreicht werden. Im einfachsten Fall kann eine dritte, in einem Empfangsantennencluster vorhandene Antenne hier zur Konsistenzprüfung der Messung genutzt werden. Es ist aber auch möglich, die zusätzlichen Daten zur Fehlerabschätzung zu nutzen.

Der Abstand zwischen jeweils zwei Empfangsantennenclustern kann mindestens zweimal, vorzugsweise mindestens dreimal, so groß sein, wie der Abstand zwischen den Empfangsantennen innerhalb eines Empfangsantennenclusters. Dies ist besonders vorteilhaft, wenn jede der Kurzzeitmesseinrichtungen zur Messung der Zeitunterschiede zwischen den Empfangszeitpunkten von Detektionseinrichtungen, die Empfangsantennen des gleichen Empfangsantennenclusters zugeordnet sind, ausgebildet ist. In diesem Fall ist es möglich, dass die ansonsten konkurrierenden Designvorgaben eines großen Antennenabstands, um möglichst große und damit gut ermessbare Laufzeitunterschiede zu erreichen und einer kompakten, ortsfesten Anordnung der Antennen, um einen möglichst unveränderlichen festen Abstand mit geringen Laufzeitunterschieden zu erreichen, gleichzeitig erfüllt werden. So kann beispielsweise für jeden Empfangsantennencluster ein Ort sowie ein Winkel zwischen der Verbindungsgerade von zwei Antennen des Antennenclusters und der Richtung einer einen kurzzeitigen Hochleistungs-Mikrowellenpuls abgebenden Quelle bestimmt werden. Eine große Beabstandung der beiden Empfangsantennencluster erlaubt in diesem Fall einen weniger spitzen Schnittwinkel der Verbindungsgeraden zwischen Empfangsantennencluster und Quelle. Damit ist eine genauere Bestimmung des Ortes möglich. Gleichzeitig sind die mindestens zwei Antennen eines Clusters relativ nahe beieinander liegend angeordnet, wodurch große Signallaufzeiten zwischen Antenne, Detektor und Kurzzeitmesseinrichtung vermieden werden können. Somit wird eine exaktere Zeitmessung möglich.

Es ist auch möglich, dass die oder eine weitere Recheneinrichtung zur Bestimmung eines Ursprungsbereichs, der den zu berechnenden Ursprungsort des Hochleistungs-Mikrowellenpulses umfasst, zu jedem Antennencluster ausgebildet ist und der Ursprungsort als Schnittmenge mindestens zweier Ursprungsbereiche bestimmt wird.

So ist es möglich, dass jeder der Empfangsantennencluster nicht nur eine eigene Kurzzeitmesseinrichtung, sondern auch eine eigene Recheneinrichtung aufweist. In diesem Fall ist es möglich, dass Empfangsantennencluster auch einzeln betrieben werden können und bei Vorhandensein mehrerer Empfangsantennencluster die Ortungsqualität verbessert wird. Die Ursprungsbereiche können die Form einer oder zweier Halbgeraden, einer Hyperbel oder eines Hyperbelastes aufweisen, wobei die Breite des Bereichs senkrecht zu der Halbgerade oder der Hyperbel einem Toleranzintervall entspricht. Eine Hyperbel bzw. ein Hyperbelast kann in diesem Fall exakt beschreiben, in welchem Bereich sich die Kurzzeit-Hochleistungs-Mikrowellenpuls abgebende Quelle gemäß der Messwerte befinden sollte. In vielen Fällen kann es aber auch gewünscht sein, die Asymptote der Hyperbel als Näherung für die Hyperbel zu nutzen. Damit kann mit einem einzelnen Empfangsantennencluster direkt die Richtung eines Angriffs bestimmt werden.

Die Bestimmung von Bereichen durch jeden Empfangsantennencluster ist besonders vorteilhaft, da hier alternativ oder ergänzend Wahrscheinlichkeitsverteilungen bestimmt werden können. Wird beispielsweise festgestellt, dass in einem Empfangsantennencluster die Datenqualität schlecht ist, da einzelne Empfangsantennen den Hochleistungs-Mikrowellenpuls nicht oder zu einer Zeit empfangen, die nicht konsistent mit den Zeiten der anderen Antennen erscheint, so kann durch die Recheneinrichtung eine breite verschmierte Wahrscheinlichkeitsverteilung bestimmt werden. Wird hingegen eine sehr hohe Signalqualität festgestellt, die beispielsweise aus einem Rauschpegel oder der Steilheit einer Anstiegsflanke bestimmt werden kann, so kann ein sehr scharf abgegrenzter Bereich ermittelt werden. Der ermittelte Fehler kann auch abhängig vom Winkel sein. Bei mindestens drei Empfangsantennen im Empfangsantennencluster ist es auch möglich, direkt einen Ort zu ermitteln, an dem sich die Hochleistungs-Mikrowellenpulse abgebende Quelle befindet. Da die Zeitintervallwerte fehlerbehaftet sind, ist es hier vorteilhaft, eine Wahrscheinlichkeitsverteilung, beispielsweise eine gausförmige Verteilung, um diesen Bereich zu bestimmen. In diesem Fall kann die Recheneinrichtung aus einer Vielzahl von Wahrscheinlichkeitsverteilungen, die jeweils durch einen Empfangsantennencluster ermittelt wurden, eine Gesamtwahrscheinlichkeitsverteilung errechnen, und damit die Position der den Hochleistungs-Mikrowellenpuls abgebenden Quelle sehr genau bestimmen. Auch in dem Fall, in dem bereits Ursprungsbereiche berechnet werden, kann es vorteilhaft sein, die ermittelten Zeitintervalle zusätzlich zu nutzen, um beispielsweise Konsistenzchecks zwischen den Empfangszeiten der Antennencluster durchzuführen.

Es ist zudem vorteilhaft, wenn die Recheneinrichtung zum kabelgebundenen oder kabellosen Empfang der Daten von zumindest einem Teil der

Kurzzeitmesseinrichtungen oder weiteren Recheneinrichtungen mittels einer Kommunikationseinrichtung ausgebildet ist, wobei die Daten Zeitunterschiede oder aus Zeitunterschieden berechnete Variablen, insbesondere Variablen, die die Ursprungsbereiche beschreiben, sind. Ein wesentlicher Vorteil der Nutzung einer Ortungseinrichtung, die ausschließlich Zeitintervalle innerhalb eines Empfangsantennenclusters misst, ist, dass die Kommunikation zwischen den Clustern nicht zeitkritisch ist. Zwar soll insgesamt eine zeitnahe Darstellung eines Berechnungsergebnisses für Nutzer erfolgen, Reaktionszeiten im Millisekundenbereich stellen hier jedoch kein Problem dar. Demgegenüber erfordert die Messung von Laufzeitunterschieden eine Zeitauflösung im Nanosekundenbereich. Durch die Ermittlung der Zeitunterschiede zwischen den Empfangszeitpunkten innerhalb der Cluster ist die Kommunikation innerhalb der Ortungseinrichtung also wesentlich weniger zeitkritisch. Damit werden eine Vielzahl von Kommunikationskanälen zwischen den Antennenclustern möglich. So kann die Kommunikation beispielsweise digitalisiert und kabelgebunden erfolgen, es ist aber auch eine kabellose digitale oder analoge Übertragung von Daten möglich. Im einfachsten Fall werden nur Zeitunterschiede sowie die Identifikation der entsprechenden Kurzzeitmesseinrichtung übertragen werden. Häufig ist es aber auch vorteilhaft bereits berechnete Variablen, die einen Bereich, in dem sich die Quelle befindet, parametrisieren, zu übertragen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine schematische Darstellung zur Berechnung einer Richtung zur Quelle eines kurzzeitigen Hochleistungs-Mikrowellenpulses aus dem Laufzeitunterschied zu zwei Antennen,
- Fig. 2: eine schematische Darstellung zur Berechnung des Orts einer Quelle eines kurzzeitigen Hochleistungs-Mikrowellenpuls aus den Laufzeitunterschieden zwischen drei Empfangsantennen,
- Fig. 3: eine schematische Darstellung zur Berechnung des Orts einer Quelle eines kurzzeitigen Hochleistungs-Mikrowellenpuls mit Hilfe von zwei Empfangsantennenclustern, die jeweils aus zwei Empfangsantennen bestehen,
- Fig. 4: eine schematische Darstellung eines Ausführungsbeispiels einer erfindungsgemäßen Ortungseinrichtung,
- Fig. 5: eine schematische Darstellung eines weiteren Ausführungsbeispiels einer erfindungsgemäßen Ortungseinrichtung, und
- Fig. 6: eine schematische Darstellung eines dritten Ausführungsbeispiels einer erfindungsgemäßen Ortungseinrichtung.

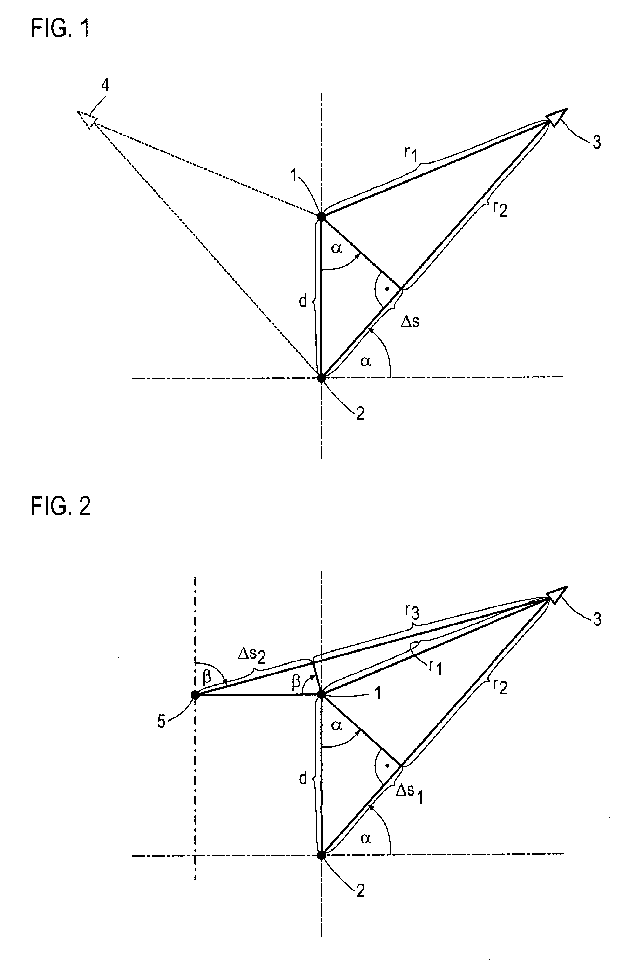

Fig. 1 zeigt eine schematische Darstellung zur Berechnung einer Richtung zu einer einen kurzzeitigen Hochleistungs-Mikrowellenpuls abgebenden Quelle aus einem Laufzeitunterschied zu zwei Empfangsantennen. Die zwei Empfangsantennen 1, 2 sind in einem Abstand d angeordnet. Die Quelle 2 eines kurzzeitigen Hochleistungs-Mikrowellenpulses befindet sich im Abstand r₁ von Empfangsantenne 1. Der Abstand zur Empfangsantenne 2 beträgt Δs + r₂. Zur einfacheren Darstellung soll hier die Näherung verwendet werden, dass der Abstand zwischen den Empfangsantennen 1 und 2 um ein Vielfaches kleiner ist als der Abstand zwischen einer der Empfangsantennen 1, 2 und der Quelle 3. In diesem Fall ist r₁ und r₂ ungefähr gleich. Diese Näherung entspricht einer Annäherung der Hyperbel durch ihre Asymptote. In diesem Fall gilt sin α = Δs : d. Hier ist allerdings anzumerken, dass eine (fiktive) Quelle 4, die auf der anderen Seite der Verbindungsgerade der Empfangsantennen 1, 2 liegt, zu einem exakt gleichen Laufzeitunterschied führen würde. Daher bleibt die berechnete Richtung zweideutig. Zudem kann kein Abstand festgestellt werden, da jede Quelle, die auf einer Hyperbel mit dem entsprechenden Laufzeitunterschied liegt, zum gleichen Laufzeitunterschied führen würde.

Die DE 10 2006 037 209 B4 nutzt zur Aufhebung der in Fig. 1 gezeigten Zweideutigkeit der Berechnung eine weitere Sonde. Eine ähnliche Anordnung ist in Fig. 2 gezeigt. Im Stand der Technik wird die zusätzliche Empfangsantenne 5 ausschließlich genutzt um zu bestimmen, ob die Quelle 3 links oder rechts der Verbindungsgerade der beiden Empfangsantennen 1 und 2 liegt. In einer Weiterentwicklung ist es jedoch möglich, aus den Laufzeitunterschieden zwischen den Empfangsantennen 1, 2 und 5 einen Ort der Quelle 3 direkt zu bestimmen. In diesem Fall wird der Winkel α zwischen der horizontalen Achse und der Verbindungsgerade zwischen Empfangsantenne 2 und der Quelle 3 ebenso berechnet wie im vorangehenden Fall mit zwei Empfangsantennen. Sind drei Empfangsantennen vorhanden, kann aber zudem ein Winkel β zwischen der Verbindungsgeraden zwischen Empfangsantenne 5 und Quelle 3 und der vertikalen Achse berechnet werden. Der Ort der Quelle 3 kann dann als Schnittpunkt der beiden ermittelten Geraden bestimmt werden.

Hier ist zu beachten, dass die Uneindeutigkeit der Richtung zunächst weiter auftritt. Wird, wie in Fig. 1, die zweite mögliche Richtung ausgehend von der Verbindungsgerade zwischen Empfangsantenne 1 und 2 sowie zusätzlich die zweite mögliche Richtung ausgehend von der Verbindungsgerade zwischen Empfangsantenne 1 und 5 eingezeichnet, so treten vier Schnittpunkte auf. Diese vier Schnittpunkte liegen jedoch im Bild rechts oberhalb der Empfangsantenne 1, rechts unterhalb der Empfangsantenne 1, links unterhalb der Empfangsantenne 1 und links oberhalb der Empfangsantenne 1. Durch eine Berücksichtigung des Vorzeichens des Laufzeitunterschieds zwischen Empfangsantenne 1 und 2 bzw. Empfangsantenne 5 und 1 kann der korrekte Schnittpunkt ausgewählt werden. Damit ist die Vieldeutigkeit auflösbar und es kann ein eindeutiger Ort für die kurzzeitige Hochleistungs-Mikrowellenpuls abgebende Quelle angegeben werden.

Soll die Ortung insbesondere für kurze Entfernungen zwischen der Quelle und den Antennen verbessert werden, ist es auch möglich statt einer reinen Richtungsberechnung eine explizite Berechnung für Hyperbeln und ihre Schnittpunkte durchzuführen. In der Regel sind die Abstände zwischen Antennen aber im Meterbereich, und die Quelle befindet sich in relativ großem Abstand. Daher sind in der Regel reine Richtungsbestimmungen ausreichend.

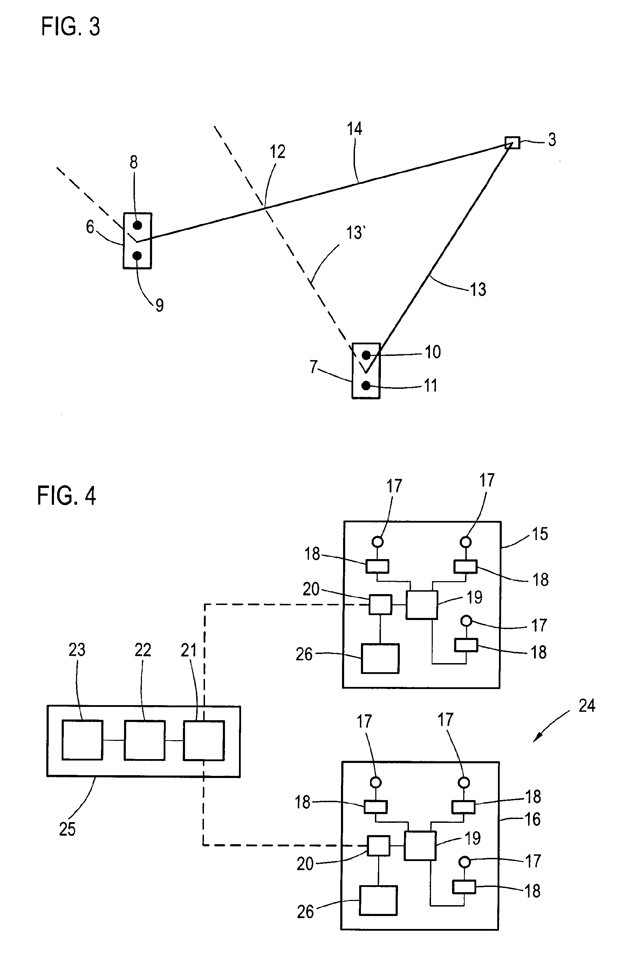

Fig. 3 zeigt eine schematische Darstellung eines Ausführungsbeispiels einer erfindungsgemäßen Ortungseinrichtung die aus zwei Empfangsantennenclustern 6, 7 besteht, die jeweils zwei Antennen 8, 9 und 10, 11 umfassen. Aus dem Zeitunterschied zwischen den Empfangszeitpunkten der Empfangsantennen 10 und 11 im Empfangsantennencluster 7 kann die Richtung 13 zur Quelle 3 bestimmt werden. Auch hier ist die Richtung jedoch uneindeutig, so dass die Quelle 3 auch in Richtung 13' liegen könnte. Aus dem Zeitunterschied zwischen den Empfangszeitpunkten der Empfangsantennen 8 und 9 des Empfangsantennenclusters 6 wird die Richtung 14 zur Quelle 3 bestimmt. Die Quelle 3 liegt am Schnittpunkt der Richtungen 13 ausgehend vom Empfangsantennencluster 7 und der Richtung 14 ausgehend vom Empfangsantennencluster 6. Die Quelle 3 kann jedoch nicht eindeutig geortet werden, da, solange ausschließlich Zeitunterschiede zwischen Empfangszeiten innerhalb einzelner Empfangsantennencluster 7, 6 genutzt werden, nicht eindeutig bestimmt werden kann, ob die Quelle 3 am Schnittpunkt der Richtungen 13, 14 oder am Schnittpunkt 12 der Richtungen 13', 14 liegt. Es ist hier also notwendig, mindestens einen Zeitunterschied zwischen den Empfangszeitpunkten einer der Empfangsantennen 8, 9 im Empfangsantennencluster 6 und dem Empfangszeitpunkt einer der Empfangsantennen 10, 11 im Empfangsantennencluster 7 zu nutzen.

Dennoch ist eine Nutzung von zwei Empfangsantennenclustern vorteilhaft. Eine exakte Ermittlung von Zeitunterschieden von Empfangszeitpunkten ist nur innerhalb eines Empfangsantennenclusters notwendig. Da hier die Abstände kurz sind, kann vorteilhaft eine lokal angeordnete Kurzzeitmesseinrichtung genutzt werden. Damit ist eine sehr genaue Bestimmung einer Richtung möglich. Durch einen großen Abstand zwischen den Empfangsantennenclustern 6 und 7 kann der Ort der Quelle 3 genauer bestimmt werden als bei naher Anordnung von drei Empfangsantennen. Die Aufhebung der Zweideutigkeit zwischen den Punkten 12 und dem Punkt 3, an dem sich die Quelle tatsächlich befindet, erfordert eine wesentlich geringere zeitlichere Auflösung. Damit sind eventuelle Ungenauigkeiten der Zeitmessung beim Vergleich der Empfangszeitpunkte von Empfangsantennen 8, 9 im Empfangsantennencluster 6 und Empfangsantennen 10, 11 im Empfangsantennencluster 7 kaum relevant. Insgesamt ist durch die Nutzung von zwei Empfangsantennenclustern hier also eine deutliche Verbesserung der Ortsbestimmung möglich.

Wie an der Beschreibung der Fig. 3 zu erkennen, bietet die Nutzung von drei Empfangsantennen in einem Empfangsantennencluster deutliche Vorteile. So kann mit drei Empfangsantennen eine eindeutige Richtung bestimmt werden. Damit ist keine Messung von Zeitunterschieden von Empfangszeitpunkten zwischen den Empfangsantennenclustern mehr notwendig. Es können also Kurzzeitmesseinrichtung genutzt werden, die lokal an einzelnen Empfangsantennenclustern angeordnet sind. Eine solche Anordnung ist schematisch in Fig. 4 dargestellt. Die Ortungseinrichtung 24 umfasst zwei Empfangsantennencluster 15 und 16 wie eine Zentraleinheit 25. Der Aufbau der Empfangsantennencluster 15 und 16 soll am Empfangsantennencluster 15 näher erläutert werden. Der Empfangsantennencluster 15 umfasst drei Empfangsantennen 17. Jede dieser Empfangsantennen 17 ist ein unabgestimmter Dipol, der mit einer Detektionseinrichtung 18 verbunden ist, die eine HF-Diode umfasst. Unter Einfluss von normaler Umfeldstrahlung sperrt die HF-Diode der Detektionseinrichtung 18 und es wird kein Detektionssignal ausgelöst. Wird von der Empfangsantenne 17 ein Hochleistungs-Mikrowellenpuls empfangen, so schaltet die HF-Diode in der Detektionseinrichtung 18 durch und es wird ein Empfangssignal an die Kurzzeitmesseinrichtung 19 geschickt.

Die Kurzzeitmesseinrichtung 19 weist drei Eingänge auf, die jeweils mit einer Detektionseinrichtung 18 verbunden sind. Sobald durch eine der Detektionseinrichtungen 18 ein Empfangssignal gegeben wird, beginnt ein Zähler in der Kurzzeitmesseinrichtung 19 zu zählen. Zudem wird gespeichert, welche der Detektionseinrichtungen 18 als erstes ausgelöst hat. Die Zählerwerte bei Empfang eines weiteren Detektionssignal werden gespeichert und jeweils dem Empfangskanal der Empfangsantenne bzw. Detektionseinrichtung 18 zugeordnet. Die Kurzzeitmesseinrichtung 19 misst also die Reihenfolge der Detektion durch die Detektionseinrichtungen 18, sowie die zeitlichen Abstände. Hier soll angemerkt werden, dass auch alternative Ausführungen möglich sind, die direkt Paaren von Detektionseinrichtungen jeweils eine Kurzzeitmesseinrichtung zuordnen.

Die Daten der Kurzzeitmesseinrichtung 19 werden anschließend durch eine Kommunikationseinrichtung 20 an die Zentraleinheit 25 übertragen. In der Zentraleinheit 25 ist eine weitere Kommunikationseinrichtung 21 angeordnet. In diesem Ausführungsbeispiel erfolgt die Übertragung kabellos und digital. Ebenso empfängt die Kommunikationseinrichtung 21 der Zentraleinheit 25 die im identisch aufgebauten Empfangsantennencluster 16 gemessenen Zeitunterschiede. Die Kommunikationseinheit 21 stellt zudem der Recheneinrichtung 22 die empfangenen Zeitunterschiede zur Verfügung. Die Recheneinrichtung 22 kann nun auf vielfältige Weise einen Ort aus den Zeitwerten bestimmen. In diesem Ausführungsbeispiel erfolgt die Berechnung durch Bestimmung bei einer horizontal ausgerichteten Parabel im Empfangsantennencluster 15 und einer vertikal ausgerichteten Parabel für den Empfangsantennencluster 16. Der Ursprung der Parabel kann fest vorgegeben sein, beispielsweise dadurch, dass nach Installation der Ortungseinrichtung die Orte der Empfangsantennencluster einprogrammiert werden, es kann aber auch vorgesehen sein, die Empfangsantennencluster mit einer Ortsbestimmungseinrichtung 26 auszurüsten. In diesem Fall kann bei Detektion eines Hochleistungs-Mikrowellenpulses beispielsweise über eine GPS-Empfänger sowie weitere ortsbestimmende Instrumente der genaue Ort des Empfangsantennenclusters bestimmt werden und ebenfalls über die Kommunikationseinrichtung 20 an die Zentraleinheit 25 übertragen werden. Damit ist ein mobiler Einsatz der Ortungseinrichtung leicht möglich.

Da die Ortsbestimmung im vorliegenden Ausführungsbeispiel mathematisch deutlich überbestimmt ist, kann durch die Recheneinrichtung 22 zudem die Konsistenz und Qualität der Ortsbestimmung ermittelt werden. So ist es beispielsweise möglich, dass bei mangelhafter Qualität des Signals ein großer Radius bestimmt wird, in dem sich die Quelle aufhält, bei guter Qualität ein kleinerer Radius. Fehlen gewisse Signale, was beispielsweise durch den Ausfall einzelner Empfangsantennencluster möglich ist, so kann die Recheneinrichtung auch ausschließlich auf die Daten von einem Empfangsantennencluster zurückgreifen. Das Ergebnis der Auswertung der Empfangszeitpunkte durch die Recheneinrichtung 22 kann anschließend auf einer Anzeigeeinrichtung 23 dargestellt werden, oder zur Steuerung weiterer Gerätschaften verwendet werden.

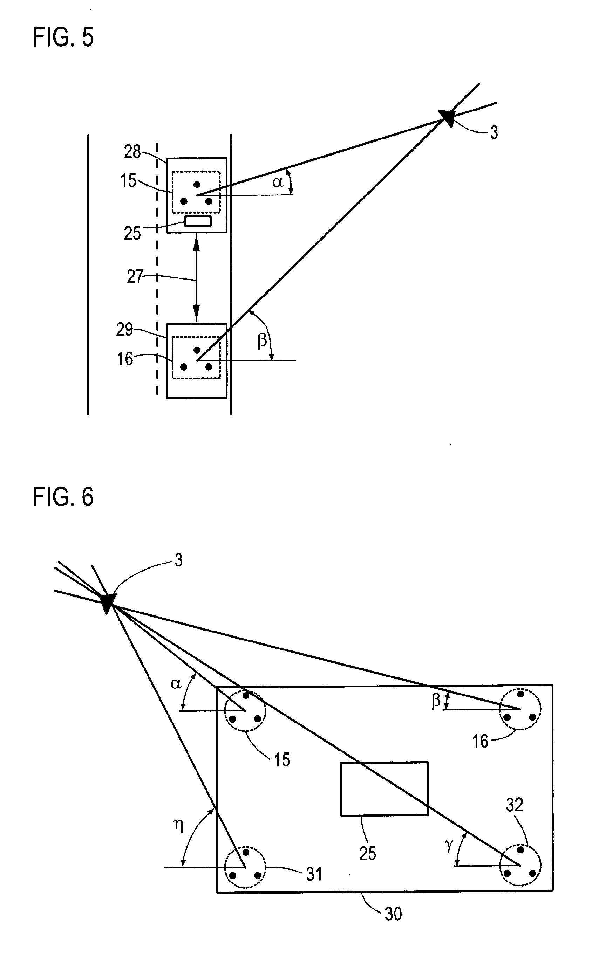

Fig. 5 zeigt ein weiteres Ausführungsbeispiel der Ortungseinrichtung. Hier sind die beiden Empfangsantennencluster 15, 16 auf zwei Fahrzeugen 28, 29 angeordnet. Hier ist es besonders vorteilhaft, wenn bei einer Fahrt mit einem zu schützenden Konvoi zumindest das erste und das letzte Fahrzeug 28, 29 mit einem Empfangsantennencluster 15, 16 ausgerüstet sind. Zudem kann eines dieser Fahrzeuge eine Zentraleinheit 25 aufweisen. Es ist aber auch möglich, dass die Zentraleinheit 25 in einem der Empfangsantennencluster 15, 16 integriert ist. Die Empfangsantennencluster 15, 16 sowie die Zentraleinrichtung 25 stehen über eine kabellose Datenverbindung 27 in Verbindung. Erfolgt nun ein Angriff durch einen kurzzeitigen Hochleistungs-Mikrowellenpuls, so kann durch jeden der Empfangsantennencluster 15, 16 eine Richtung α, β bestimmt werden, aus der der Angriff erfolgte. Durch die Zentraleinheit 25 kann aus den beiden Richtungen α, β eindeutig eine Position der Quelle des kurzzeitigen Hochleistungs-Mikrowellenpulses ermittelt werden. Damit ist eine Bestimmung des Ausgangsortes eines Angriffs in Echtzeit möglich.

Fig. 6 zeigt ein weiteres Ausführungsbeispiel der Ortungseinrichtung. Hier sind vier Empfangsantennencluster 15, 16, 31 und 32 auf einem Gebäude 30 angeordnet. Auch hier erfolgt ein Angriff durch eine einen kurzzeitigen Hochleistungs-Mikrowellenpuls abgebende Quelle 3. Die vier Empfangsantennencluster 15, 16, 31 und 32 sind kabellos mit der Zentraleinheit 25 verbunden. Wird der Hochleistungs-Mikrowellenpuls von allen vier Empfangsantennenclustern 15, 16, 31 und 32 empfangen, können die vier Winkel α, β, η und ε bestimmt werden. Durch die Überbestimmung des Ortes der Quelle 3 können somit Empfangsausfälle einzelner Empfangsantennencluster kompensiert werden. So ist es möglich, dass der Empfangsantennencluster 32 bei der gezeigten Position der Quelle 3 im Schatten des Gebäudes liegt. Bei ungünstigen Umständen kann es jedoch sein, dass der Empfangsantennencluster 32 ein Signal empfängt, das beispielsweise an einem anderen Gebäude reflektiert wurde. In diesem Fall würde sich ein falscher Winkel y ergeben. Da sich jedoch weiterhin die Richtungen der Empfangsantennencluster 15, 16 und 31 am Ort der Quelle 3 treffen, könnte festgestellt werden, dass durch den Empfangsantennencluster 32 kein korrektes Signal empfangen wird und dieser könnte bei der Berechnung des Ortes der Quelle ausgeschlossen werden.

## Patentansprüche

1. Ortungseinrichtung zum Orten einer einen kurzzeitigen Hochleistungs-Mikrowellenpuls abgebenden Quelle (3),
**dadurch gekennzeichnet,**
**dass** die Ortungseinrichtung (24) mindestens drei beabstandete, nicht auf einer Linie angeordnete Empfangsantennen (1, 2, 8, 9, 10, 11, 17), denen jeweils eine Detektionseinrichtung (18) zur Erfassung des Zeitpunkts des antennenseitigen Empfangs des Hochleistungs-Mikrowellenpulses zugeordnet ist, mindestens eine Kurzzeitmesseinrichtung (19) zum Ermitteln mindestens zweier Zeitunterschiede zwischen den Empfangszeitpunkten jeweils zweier der Detektionseinrichtungen (18), sowie eine Recheneinrichtung (22) zur Berechung eines Ursprungsortes des Hochleistungs-Mikrowellenpulses basierend auf zumindest zwei der gemessenen Zeitunterschiede umfasst.

2. Ortungseinrichtung nach Anspruch 1,
**dadurch gekennzeichnet,**
**dass** die Empfangsantennen (1, 2, 8, 9, 10, 11, 17) unabgestimmte Dipole sind und die Detektionseinrichtungen (18) eine HF-Diode aufweisen, deren Ansprechschwelle zumindest so hoch ist, dass die HF-Diode, bezogen auf ein Kurzzeitintegral über einige Nanosekunden, erst oberhalb der Empfangsfeldstärke einer permanenten Umfeldstrahlung durchschaltet.

3. Ortungseinrichtung nach einem der vorangegangenen Ansprüche,
**dadurch gekennzeichnet,**
**dass** wenigstens zwei beabstandet angeordnete Empfangsantennencluster (6, 7, 15, 16, 31, 32) vorhanden sind, wobei jeder Empfangsantennencluster (6, 7, 15, 16, 31, 32) mindestens zwei, vorzugsweise drei, Empfangsantennen (1, 2, 8, 9, 10, 11, 17) aufweist.

4. Ortungseinrichtung nach Anspruch 3,
**dadurch gekennzeichnet,**
**dass** der Abstand zwischen jeweils zwei Empfangsantennenclustern (6, 7, 15, 16, 31, 32) mindestens zwei mal, vorzugsweise mindestens drei mal, so groß ist wie der Abstand zwischen Empfangsantennen (1, 2, 8, 9, 10, 11, 17) innerhalb eines Empfangsantennclusters (6, 7, 15, 16, 31, 32).

5. Ortungseinrichtung nach Anspruch 3,
**dadurch gekennzeichnet,**
**dass** jede der Kurzzeitmesseinrichtungen (19) zur Messung der Zeitunterschiede zwischen den Empfangszeitpunkten von Detektionseinrichtungen (18), die Empfangesantennen (1, 2, 8, 9, 10, 11, 17) des gleichen Empfangsantennenclusters (6, 7, 15, 16, 31, 32) zugeordnet sind, ausgebildet ist.

6. Ortungseinrichtung nach Anspruch 4,
**dadurch gekennzeichnet,**
**dass** die oder eine weitere Recheneinrichtung (22) zur Bestimmung eines Ursprungsbereichs, der den zu berechnenden Ursprungsort des Hochleistungs-Mikrowellenpulses umfasst, für jeden der Empfangsantennencluster (6, 7, 15, 16, 31, 32) ausgebildet ist und der Ursprungsort als Schnittmenge mindestens zweier Ursprungsbereiche bestimmt wird.

7. Ortungseinrichtung nach Anspruch 4,
**dadurch gekennzeichnet,**
**dass** der berechnete Ursprungbereich die Form einer oder zweier Halbgeraden oder einer Hyperbel hat, wobei die Breite des Bereichs senkrecht zu der Halbgerade oder der Hyperbel einem Toleranzintervall entspricht.

8. Ortungseinrichtung nach Anspruch 4,
**dadurch gekennzeichnet,**
**dass** die Recheneinrichtung (22) zum kabelgebundenen oder kabellosen Empfang der Daten von zumindest einem Teil der Kurzzeitmesseinrichtungen (19) oder weiteren Recheneinrichtung mittels einer Kommunikationseinrichtung (20, 21) ausgebildet ist, wobei die Daten Zeitunterschiede oder aus Zeitunterschieden berechnete Variablen, insbesondere Variablen, die die Ursprungsbereiche beschreiben, sind.
